(19) **Europäisches Patentamt**

**European Patent Office**

**Office européen des brevets**

(11) **EP 1 172 664 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(51) Int Cl.7: **G01S 7/292**

(21) Anmeldenummer: **01115879.7**

(22) Anmeldetag: **29.06.2001**

(54) **Umlauf-Integration-Korrelation**

Scan to Scan Correlation

Corrélation de balayage à balayage

(84) Benannte Vertragsstaaten:
**DE FR GB IT NL SE**

(30) Priorität: **13.07.2000 DE 10034080**

(43) Veröffentlichungstag der Anmeldung:
**16.01.2002 Patentblatt 2002/03**

(73) Patentinhaber: **EADS Deutschland GmbH**
**81663 München (DE)**

(72) Erfinder: **Hofele, Franz-Xaver**
**73072 Donzdorf (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**DE-A- 3 924 859        DE-A- 19 600 086**
**DE-A- 19 734 614**

**Beschreibung**

Die Erfindung betrifft ein Verfahren und eine zur Durchführung dieses Verfahrens geeignete Vorrichtung nach den Ansprüchen 1 und 25.

Ein Radarempfänger erhält nicht nur die gewünschten Reflexionen von Zielen, sondern auch unerwünschte Echos, den sogenannten Clutter. Dieser resultiert z.B. witterungsbedingt aus Regen oder Schnee. Es kann sich dabei aber auch um Seeclutter, Bodenclutter oder um Echos des Straßenverkehrs handeln.

Im Rahmen der Zielentdeckung sind bei der Radarsignalverarbeitung mit Hilfe entsprechender Algorithmen Ziele von Clutter zu trennen. Bei Zielen, deren Echoleistung die des Clutters deutlich übersteigt, d.h. Ziele mit relativ hohem Signal-zu-Clutter-Verhältnis S/C ist diese Zielentdeckung relativ unkritisch. Schwieriger wird die Problematik jedoch bei Zielen, deren Echoleistung gerade mal so groß oder gar etwas kleiner ist, als die Spitzenamplituden des Clutters (Clutterspitzen). Für die Detektion dieser sogenannten 'kleinen' Ziele in den Clutterspitzen nutzt man die sogenannte Umlauf-Integration-Korrelation UIK (englisch: Scan-to-Scan-Correlation StSC).

Betrachtet man beispielsweise ein Ziel-Seeclutter-Szenario, dann wird dort dem Zufallsprinzip folgend an einer bestimmten Stelle (Auflösungszelle) des Szenarios beispielsweise in einem Umlauf eine Clutterspitze erscheinen, im nächsten und den folgenden Umläufen jedoch nicht. Im Gegensatz dazu, werden Ziele jedoch von Umlauf zu Umlauf mit quasi der selben Amplitude erscheinen. Durch Mittelung bzw. Gewichtung der Amplituden mehrerer Umläufe, Umlauf-Integration UI genannt, wird der Clutter abgesenkt, während Ziele in ihrer Amplitude bestehen bleiben. Auf diese Weise treten Ziele aus dem Clutter hervor. Im Rahmen dieser Mittelung werden die aktuellen Eingangsamplituden $A_i$ und die Eingangsamplituden aus der Vergangenheit $\bar{A}_{i,alt}$ (Vergangenheitsamplitude) jeder einzelnen Auflösungszelle mit dem Faktor $\alpha$ gewichtet und dann addiert. Die resultierenden Ausgangsamplituden $\bar{A}_{i,neu}$ werden einerseits weiterverarbeitet, andererseits aber auch als Vergangenheitsamplitude für den nächsten Mittelungsprozess zwischengespeichert, so daß gilt $\bar{A}_{i,neu} = \bar{A}_{i+1,alt}$. Der UI-Mittelungsprozess entspricht somit der Gleichung:

$$\bar{A}_{i,neu} = \alpha \cdot A_i + (1 - \alpha) \cdot \bar{A}_{i,alt} \qquad \text{Gl. 1}$$

Damit jedoch auch kleine Ziele aus dem Clutter hervortreten, ist eine Mittelung über eine größere Zahl von Umläufen notwendig, was jedoch für schnelle Ziele im allgemeinen nicht gelingt, da sie sich nur für die Zeit weniger Umläufe innerhalb ein und derselben Clutterzelle befinden. Die Resultate der UI-Mittelungen über mehrere Umläufe werden im Umlaufspeicher-Video (USP-Video) zusammengefaßt..

Nachteilig wirkt sich das UI-Verfahren bei bewegten Zielen aus, welche sich über mehrere Auflösungszellen erstreckten. Hierbei werden die aus dem herkömmlichen UI-Verfahren resultierenden Amplituden der Ziele geschwächt. Für den Fall, daß sich ein Ziel während eines Umlaufes über genauso viele oder mehr Auflösungszellen hinweg bewegt als es durch seine Ausmaße überdeckt, wird die Amplitude des Zielsignals gar um den Faktor $\alpha$ geschwächt. Weiterhin bilden sich bewegende Ziele im USP-Video einen 'Schweif'; d.h. es finden sich in Auflösungszellen, welche von den Zielen durchwandert wurden immer noch Reste der Signalamplituden. Das Abklingen dieser Signalamplituden (Schweif) dauert dabei desto länger, je kleiner der Faktor $\alpha$ bei der UI-Mittelung oder -Gewichtung gewählt wurde.

Innerhalb eines Radarsystems müssen aus dem mittels des UI-Verfahrens erzeugten USP-Video diejenigen Signale ausgewählt werden, welche dem eigentlichen Zielextraktor *ZIE* zugeführt werden sollen. Diese Auswahl wird mittels einer Umlauf-Korrelation UK getroffen. Die UK kann hierbei auch größtenteils die sich aus der UI-Mittelung oder -Gewichtung ergebende ungünstige Erscheinung der 'Schweifbildung' bei sich bewegenden Zielen lösen; nicht jedoch das Problem der Amplitudenverringerung.

Im allgemeinen werden bei der UK zwei Schwellen *TEK*1 und *TEK*2 vorgegeben, deren Größe sich aus dem Clutterniveau ergibt. Für jede Auflösungszelle ist dann abzufragen, ob die entsprechende Amplitude innerhalb des USP-Videos $\bar{A}_{i,alt}$ größer als die Schwelle *TEK*1 und gleichzeitig die Amplitude des aktuellen Umlaufs $A_i$ größer als die Schwelle *TEK2* ist. Ist dies der Fall, dann gibt man die Amplitude des USP-Videos $\bar{A}_{i,alt}$ an den Zielextraktor *ZIE* weiter; ansonsten wird eine Null an den *ZIE* übergeben. Das heißt, bei der UK wird die Historie des Amplitudenverlaufs in Betracht gezogen; falls die Auflösungszelle bereits im vorhergehenden Umlauf einen Amplitudenwert enthielt, welcher mit großer Wahrscheinlichkeit einem potentiellen Ziel zuzuordnen ist, dann erfolgt eine Übergabe des entsprechenden Wertes aus dem USP-Videos an den *ZIE*. Der entsprechend von der *ZIE* zu bearbeitende Amplitudenwert $A_{ZIE}$ ist wie folgt definiert:

$$A_{ZIE} = \begin{cases} \bar{A}_{i,alt} & \text{für } (A_i > TEK2) \wedge (\bar{A}_{i,alt} > TEK1) \\ 0 & \text{sonst} \end{cases} \qquad \text{Gl. 2}$$

Ein so gestalteter UK-Algorithmus bedingt eine Verminderung der Übertragung von durch die 'Schweifbildung' im USP-Video verursachten Amplitudenwerten, welchen kein aktuelles Ziel mehr zuzurechnen ist. Ebenfalls werden hierdurch die Auswirkungen kurzzeitiger, starker Clutterspitzen (Spicky-Clutter) eliminiert.

Der Gesamtprozess der Signalgewichtung UI und Signalauswahl UK wird als Umlauf-Integration-Korrelation UIK bezeichnet.

Zur Verbesserung der Leistungsfähigkeit der UIK-Algorithmik sind Verfahren bekannt, welche zum einen die Schweifbildung innerhalb der UI dadurch zu mindern suchen, indem sie den Wert $\bar{A}_{i,alt}$ nur einer erneuten Mittelung zuführen, wenn er einen vorbestimmten Schwellwert (Wegwerfschwelle *WWS*) überschreitet. Zum anderen wird hierbei innerhalb der UK ein dritter Schwellwert *TEK3* definiert, bei dessen Überschreiten durch den aktuell durch das Radarsystem ermittelten Amplitudenwert $A_i$ dieser Wert $A_i$ ohne weitere Vergleiche durchzuführen, direkt an den *ZIE* übergeben wird. In diesem Fall wird also der Amplitudenwert $A_i$ an der UIK vorbei direkt an den *ZIE* weitergereicht (By-Pass-Funktion). Durch eine solche By-Pass-Funktion lassen sich starke Ziele bei welchen die Amplitude des Zielechos größer als *TEK3* ist auch bei hoher Geschwindigkeit detektieren. Nachteilig wirkt sich hierbei jedoch aus, daß auch große Clutteramplituden direkt in den *ZIE* übergeleitet werden.

Andere bekannte Verfahren zur Verbesserung der Leistungsfähigkeit der UIK-Algorithmik leiten nur solche Werte $A_i$ an die UI weiter, die größer als ein vorbestimmter Schwellwert *TEK* sind. Ist ein Wert $A_i$ kleiner, so wird eine Null an die UI weitergeleitet. Zur Minimierung der Schweifbildung erfolgt auch hier, wie bereits zuvor beschrieben, innerhalb der UI ein Vergleich mit einer Wegwerfschwelle *WWS*. Innerhalb einer solchen UIK leitet die UK nur jene Amplitudenwerte des USP-Videos an den ZIE weiter, welche wiederum größer als *TEK* sind. Dieses Verfahren minimiert zwar die zur Durchführung benötigte Prozessorleistung, die UIK degeneriert hierbei jedoch annähernd zu einer reinen UI.

Aufgabe der Erfindung ist es, ein Verfahren und eine zur Durchführung dieses Verfahrens geeignete Vorrichtung zu finden, welche es sicher erlauben, bewegte Ziele bei gleichzeitig nicht allzu hoher Amplitude des Zielechos zu detektieren und gleichzeitig die Wahrscheinlichkeit für das Auftreten von Scheinzielen zu minimieren.

Die Aufgabe wird durch ein Verfahren und eine zur Durchführung dieses Verfahrens geeignete Vorrichtung mit den in den Ansprüchen 1 und 25 beschriebenen Merkmalen gelöst. Hierbei wird durch die Erweiterung einzelner einer Auflösungszelle des Radarsystems zugeordneten Signalamplituden $A_{i-1}$ (Amplitude eines Signals während des Umlaufs, welcher vor dem aktuellen Umlauf stattfand) auf angrenzende Auflösungszellen ermöglicht, den Clutter mittels eines kleinen Faktor $\alpha$ für die Gewichtung bei der UI effektiv abzusenken und gleichzeitig die Echoamplitude der (bewegten) Ziele konstant zu halten, was die Detektion von bezogen auf ihre Amplitude relativ kleinen Zielen garantiert.

Vorteilhafte Ausgestaltungen und Weiterbildungen der Erfindung sind in den untergeordneten Ansprüchen angeführt.

Das erfindungsgemäße Verfahren zeichnet sich insbesondere durch die Implementierung eines Teilalgorithmus *ERW* innerhalb der Prozedur zur Umlaufintegration *UI*1 aus, welcher dazu dient die einzelnen einer Auflösungszelle des Radarsystems zugeordneten Signalamplituden $A_{i-1}$ (Amplitude eines Signals während des Umlaufs, welcher vor dem aktuellen Umlauf stattfand) mit einem Erweiterungs-Schwellwert *EWS zu* vergleichen. Dabei wird für den Fall, daß $A_{i-1}$ den Wert *EWS* überschreitet der Wert derjenigen Signalamplituden $A_{i-1}$ auf eine bestimmte Anzahl der den zugehörigen Auflösungszellen in azimutaler und/oder lateraler Richtung benachbarten Auflösungszellen erweitert. Der Algorithmus *ERW* garantiert somit, daß sich potentielle Ziele die für einen Umlauf in einer Auflösungszelle detektiert wurden, aber sich auf Grund ihrer Geschwindigkeit beim nächsten Umlauf bereits in anderen Speicherzellen befinden, nicht verloren gehen. Es ist dabei vorteilhaft, wenn die Anzahl *NUM_ERW* an Auflösungszellen, welchen der Wert einer den Erweiterungs-Schwellwert *EWS* überschreitenden Signalamplitude $A_{i-1}$ zugeordnet wird, der maximalen Anzahl von Auflösungszellen entspricht, welche ein zu detektierendes Ziel in Abhängigkeit seiner Geschwindigkeit innerhalb eines Meßzyklus zu durchqueren in der Lage ist. Da diese Erweiterung innerhalb eines Teilzweigs der Umlaufintegration *UI* noch auf Grundlage von noch nicht gemittelten Daten stattfindet, vermeidet das erfindungsgemäße Verfahren die Problematik herkömmlicher Verfahren, bei welchen durch die Gewichtung die Signalamplituden bewegter Ziele vermindert wird.

In besonderer Weise kann somit in einem gesonderten, dem Teilalgorithmus *UI*1 ein Teilzweig *UI*2 parallel geschaltet, in welchem eine standardmäßige Signalgewichtung zur Absenkung der Signalamplituden des Clutters mit einem sehr geringen Faktor $\alpha$ für die Mittelung durchgeführt wird. Vorteilhaft sollte der Faktor $\alpha$ hierbei zu 0.25 gewählt werden. Abhängig von den Rahmenbedingungen beim praktischen Einsatz des Verfahrens ist es selbstverständlich auch denkbar einen etwas anderen Wert für den Faktor zu wählen; wobei jedoch immer darauf geachtet werden sollte, ihn klein genug zu halten, um eine starke Dämpfung eines eventuell auftretenden Amplitudenschweif im USP zu erreichen. Ein geringer Wert des Gewichtungsfaktors $\alpha$ führt zudem zu einer starken Absenkung der Signalenergie von Clutter, kann aber bei herkömmlichen Verfahren nicht verwendet werden, da er dort zugleich auch zu einer starken Abschwächung der Signalamplituden von Zielechos führt.

In vorteilhafter Weise werden bei dem erfindungsgemäßen Verfahren noch vor der Durchführung der UI diejenigen Parameter aus den Meßdaten $A_i$ bestimmt, welche zur Berechnung der für die Durchführung der UIK notwendigen Schwellwerte notwendig sind. Somit können die das Umgebungsszenario beschreibenden Parameter der Verteilungsfunktion der Amplitudensignale bereits aus den Originaldaten geschätzt werden. Als sinnvolle Parameter zur Berechnung der Schwellwerte zeigen sich der Mittelwert $M$ und die Streuung $S$ der Meßdaten. In vorteilhafter Weise werden drei Schwellwerte berechnet und zur Durchführung der UIK herangezogen. Dabei können diese beispielsweise anhand des Cluttermodells der Gauss-Verteilung berechnet werden, so

- daß der Schwellwert $TEK2$, welcher eine Schwelle für den Clutter vor der UI darstellt, gemäß $TEK2 = M + S \cdot K2$ mit $K2 = 2{,}32$ (bezogen auf eine Falschalarmwahrscheinlichkeit von $P_{fa} = 10^{-2}$) berechnet wird,

- daß der Schwellwert $TEK1$, welcher eine Schwelle für den Clutter nach der UI, d.h. bezogen auf die Amplituden der gemittelten Umläufe darstellt, gemäß

$$TEK1 = M + S \cdot \sqrt{\frac{\alpha}{2-\alpha}} \cdot K1$$

mit $K1 = 4{,}27$ (bezogen auf eine Falschalarmwahrscheinlichkeit von $P_{fa} = 10^{-5}$) berechnet wird,

- und daß der Schwellwert $TEK3$, welcher die Schwelle für eine Bypass-Funktion darstellt, gemäß $TEK3 = M + S \cdot K3$ mit $K3 = 4{,}27$ (bezogen auf eine Falschalarmwahrscheinlichkeit von $P_{fa} = 10^{-5}$) berechnet wird.

In vorteilhafter Weise wird der Schwellwert $TEK2$ von dem UI1-Teilalgorithmus $MUX$ für einen Vergleich der einzelnen, einer Auflösungszelle des Radarsystems zugeordneten Signalamplituden $A_{i-1}$ des vorangegangenen Umlaufs herangezogen. Dabei werden diejenigen Werte $A_{i-1}$ auf Null gesetzt, welche nicht größer als die Schwelle $TEK2$ sind. Im Anschluß an diesen Vergleich werden die Werte $A_{i-1}$ an den Algorithmus $ERW$ zur Weiterverarbeitung weitergeleitet.

In einem sich der Erweiterung innerhalb $ERW$ anschließenden Verfahrensschritt ist es denkbar einen UI1-Teilalgorithmus $A1$ zu implementieren, welcher jede einzelne Auflösungszelle die Werte der durch die Teilalgorithmen $ERW$ und $MUX$ behandelten Signalwerte des vorangegangenen Umlaufs $A_{i-1}$ mit den Werten der Signalamplituden des aktuellen Umlaufs $A_i$ vergleicht. Hierbei soll sodann für den Fall, daß gilt: $A_{i-1,ERW} > 0$ und $A_i > TEK2$, der Wert $A_i$ weiterverarbeitet und ansonsten der Wert Null weiterverarbeitet werden.

Gewinnbringend können Mittels eines dem UI1-Teilalgorithmus $A1$ nachgeschalteten Puls-Längen-Diskriminators $PLD$ sogenannte Clutter-Geister-Ziele (in der Regel mit der Pulslänge 1 in Entfernungsrichtung), welche ungünstiger weise durch die Prozesse $ERW$ und $A1$ entstehen können eliminiert werden. Hierbei werden bei Betrachtung einzelner Entfernungszellen diejenigen der von $A1$ gelieferten Werte $A_i$ auf Null gesetzt werden, deren direkte Entfernungs-Nachbarzellen bereits den Wert Null beinhalten.

In einer alternativen Ausgestaltung der Erfindung ist es aber auch denkbar, den Puls-Längen-Diskriminator $PLD$ direkt innerhalb des Algorithmus $A1$ zu implementieren auf die Weise, daß dieser in einem ersten Schritt die an seinem Eingang anliegenden Werte $A_i$, welche kleiner als ein Schwellwert $TEK2$ sind auf Null setzt. Sodann setzt der $PLD$ diejenigen verbliebenen Werte $A_i$ auf Null, deren direkte Entfernungs-Nachbarzellen bereits den Wert Null beinhalten. Die so durch $PLD$ bearbeiteten Werte liegen am Ausgang der PLD zur Weiterverarbeitung bereit, so daß für den Fall, daß gilt: $A_{i-1,ERW} > 0$ und $A_i > TEK2$, der Ausgangswert der $PLD$ als Ausgangswert von $A1$ dient und ansonsten der Wert Null; wobei $A_{i-1,ERW}$ den Wert von $A_{i-1}$ nach der Behandlung durch den $ERW$ Algorithmus repräsentiert.

Es ist zudem eine Ausgestaltung der Erfindung denkbar, bei welcher innerhalb des Algorithmus $A1$ ein Bypass-Algorithmus realisiert ist, der Werte $A_i$, für die gilt $A_i > TEK3$, am Algorithmus $PLD$ vorbei leitet, so daß für den Fall, daß gilt: $A_{i-1,ERW} > 0$, diese Werte durch $A1$ einer Weiterverarbeitung zugänglich sind. Durch diese Variante der Erfindung hat ein Ziel, welches ansonsten durch die PLD eliminiert würde via Bypass-Logik die Chance zur Detektion. Dies ist aber nur der Fall, wenn die Geschwindigkeit des Ziels die vorgegebene ERW-Bedingung erfüllt (d.h.: die Ziele bewegen sich nicht schneller als $NUM\_ERW$ Auflösungszellen je Umlauf fort) und die Signalamplitude des vorangegangenen Umlaufs $A_{i-1}$ größer Null war.

In besonders vorteilhafter Weise werden im Rahmen der erfindungsgemäßen UIK die Teilalgorithmen $MUX$, $ERW$, $A1$ und $PLD$ in einem gemeinsamen UI-Teilalgorithmus $UI1$ zusammengefaßt.

Beispielhaft soll nachfolgend der Verfahrensablauf innerhalb dieses $UI1$ Prozesses anhand der Verfahrensschritte a) bis f) aufgezeigt werden. Betrachtet werden soll die Situation, daß festgelegt wurde, daß ein Amplitudenwert innerhalb $ERW$ bei Überschreiten des Erweiterungs-Schwellwertes $EWS$ um 3 Auflösungszellen erweitert wird; d.h. das Ziel bewegt sich von Umlauf zu Umlauf um maximal 3 Auflösungszellen fort (dies ist auch beim Nachfolgenden Beispiel der Fall). Weiterhin sei $TEK2 = 2{,}5$.

Clutteramplituden  Zielamplituden  Clutteramplituden

a) Amplitude des vorherigen Umlaufs $A_{i-1}$  0 0 0 1 2 0 **8 9 6 7** 0 1 2 0 1

b) $A_{i-1}$ nach dem Algorithmus *MUX*  0 0 0 0 0 0 **8 9 6 7** 0 0 0 0 0

c) $A_{i-1}$ nach den Algorithmen *MUX* und *ERW*  0 0 0 **8 9 9 9 9 9 9 9 7 7** 0 0

Clutteramplituden  Zielamplituden  Clutter

d) Amplituden den aktuellen Umlaufs $A_i$  1 0 1 2 3 0 0 1 0 **8 9 6 7** 1 0

Clutter-Geister-Ziel

e) Szenario nach dem Algorithmus *A*1  0 0 0 0 **3** 0 0 0 0 **8 9 6 7** 0 0

f) Szenario nach dem Algorithmus *PLD*  0 0 0 0 0 0 0 0 0 **8 9 6 7** 0 0

In einer weiteren vorteilhaften Ausgestaltung des erfindungsgemäßen Verfahrens wird der UI-Teilalgorithmus *UI*2 um einen Algorithmus *A*2 erweitert. Dieser Algorithmus *A*2 vergleicht für jede Auflösungszelle den aktuell anstehenden, via $\alpha$ gewichteten Amplitudenwert $\bar{A}_{i,neu}$ und den Amplitudenwert des aktuellen Umlaufs $A_i$ mit dem Schwellwert *TEK*2. Sollte sodann dieser Vergleich ergeben, daß der gemittelte Amplitudenwert $\bar{A}_{i,neu}$ größer als *TEK*2 ist und gleichzeitig der Amplitudenwert des aktuellen Umlaufs $A_i$ kleiner oder gleich *TEK*2 ist, fließt an Stelle des gemittelten Amplitudenwerts $\bar{A}_{i,neu}$ der Wert $\frac{TEK1}{2}$ in den aktuellen Gewichtungsprozess ein. Auf diese Weise wird es möglich, einen aus dem Gewichtungsprozess resultierenden Schweif schnell abzusenken, welche sich bewegende Ziele im USP-Video bilden.

Um den Verarbeitungsaufwand des Verfahrens zu vermindern, bietet es sich an, daß mindestens einem der beiden parallel laufenden UI-Teilalgorithmen *UI*1 und *UI*2 ein Algorithmus zur Datenreduktion vorgeschaltet wird. Dieser Algorithmus sollte jene Amplitudenwerte des aktuellen Umlaufs $A_i$ noch vor einer Weiterverarbeitung auf Null setzen, welche kleiner oder gleich *TEK*1 sind.

In vorteilhafter Weise wird der größere der beiden von den parallel laufenden UI-Teilalgorithmen *UI*1 und *UI*2 gelieferten Werte im Rahmen des UK-Algorithmus der UIK weiterverarbeitet. Im Rahmen dieser Weiterverarbeitung wird erfindungsgemäß innerhalb der UK für jede Auflösungszelle der entsprechende Amplitudenwert innerhalb des USP-Videos $\bar{A}_{i,neu}$ und der entsprechende Amplitudenwert des aktuellen Umlaufs $A_i$ mit dem Schwellwert *TEK*1 verglichen. Für den Fall, daß hierbei sowohl $\bar{A}_{i,neu}$ als auch $A_i$ größer als *TEK*1 sind wird der Wert $\bar{A}_{i,neu}$ an den Zielextraktor *ZIE* weitergeleitet, ansonsten der Wert Null. In vorteilhafter Weise wird hierbei ein einziger, geringwertiger Schwellwertes *TEK*1 für beide Vergleiche herangezogen. Auf diese Weise lassen sich noch Ziele, die einen so geringen Signalwert aufweisen, daß sie gerade *TEK*1 überschreiten detektieren. Die Verwendung eines solch geringen Schwellwertes wird erst durch den erfindungsgemäßen Gebrauch eines kleinen Gewichtungsfaktors $\alpha$ möglich, da dieser Faktor die Clutteramplituden massiv unterdrückt. Im Gegensatz dazu muß, wie eingangs erwähnt bei herkömmlichen Verfahren der Amplitudenwert $A_i$ mit einem größeren Schwellwert (beispielsweise *TEK*2) verglichen werden, um zu vermeiden, daß eine Clutteramplitude als Scheinziel fehlgedeutet wird.

Gewinnbringend können mittels eines Bypass-Algorithmus diejenigen Amplitudenwerte des aktuellen Umlaufs $A_i$ direkt an den *ZIE* weiterleiten, deren Wert größer als der Schwellwert *TEK*3 ist. Auf diese weise werden hohe Zielamplituden, welche von starken aber schnellen Zielen stammen, direkt an den *ZIE* weitergeleitet werden, um zu vermeiden, daß diese Zielechos verloren gehen, weil sie auf Grund Ihres einmaligen Auftretens in Entfernungsrichtung vom *PLD*-Algorithmus eliminiert werden.

In vorteilhafter Weise ist es auch möglich, innerhalb der *UI* mittels eines Bypass-Algorithmus diejenigen Amplitudenwerte des aktuellen Umlaufs $A_i$ direkt an den Algorithmus *MAX* weiter zu leiten, deren Wert größer als der Schwellwert *TEK*3 ist. Da *MAX* den größten der an seinem Eingang anliegenden Werte an seinem Ausgang zur Weiterverarbeitung zur Verfügung stellt, geht somit ein entsprechend hoher Wert $A_i$ ($A_i$ < *TEK*3) nicht verloren, auch wenn er zuvor durch PLD eliminiert wurde. Die Weiterverarbeitung und Weiterleitung durch die anschließende *UK* verlangt erfindungsgemäß nur einen Signalwert, der größer als *TEK*1 ist, so daß ausgehend von *TEK*3 > *TEK*1 der Wert $A_i$

durch die Bypass-Logik quasi direkt an den ZIE weitergeleitet wird.

Um Speicherplatz zu sparen ist es denkbar, daß der UI-Teilalgorithmus *MUX* so angepaßt wird, daß an Stelle der Erzeugung eines Datenfeldes, welches die Amplitudenwerte $A_{i-1}$ des vorangegangen Umlaufs bzw. Nullen enthält, ein rein binäres Datenfeld erzeugt wird, welches beispielsweise an Stelle der Amplitudenwerte $A_{i-1}$ eine 1 und ansonsten eine 0 enthält. Auf diese Weise entsteht eine Ressourcen schonende Verzeigerung auf den USP Videospeicher innerhalb des *UI*1-Teils der *UI*, in welchem ohnehin die absoluten Werte von $A_{i-1}$ abgelegt sind.

In vorteilhafter Weise ergibt sich eine weitere Vereinfachung des erfindungsgemäßen Verfahrens, wenn der Berechnung der für die Durchführung der UIK notwendigen Schwellwerte ein Algorithmus vorangestellt wird, welcher die Signalamplituden $A_i$ so gewichtet, daß die Clutterverteilung für alle Clutterszenarien annähernd mittelwertfrei ist ($M \approx 0$). Hierdurch wird es möglich die Schwellwerte in einfacherer Weise zu bestimmen. Demgemäß wird der Schwellwert *TEK*2, gemäß $TEK2 = M + S \cdot K2$ mit $K2 = 2{,}32$ (bezogen auf eine Falschalarmwahrscheinlichkeit von $P_{fa} = 10^{-2}$) berechnet. Hieraus lassen sich sodann die Schwellwerte *TEK*1 und *TEK*3 mittels einer multiplikativen Konstanten $K_j$ aus *TEK*2 ableiten, so daß $TEK1 = TEK2 \cdot K_1$ bzw. $TEK3 = TEK2 \cdot K_3$ gilt.

In besonders vorteilhafter Weise, wird eine Vorrichtung zur Durchführung des erfindungsgemäßen Verfahrens eine Einheit zur Durchführung der Umlaufintegration *UI* aufweisen, welche mindestens zwei parallele Verarbeitungszweige umfaßt. Dabei ist es in gewinnbringender Weise denkbar am Ausgang der *UI* denjenigen Wert, der von den parallelen Verarbeitungszweigen ermittelten Werte, zur Weiterverarbeitung zur Verfügung zu stellen, welcher am größten ist.

In vorteilhafter Weise ist hierbei einer der parallel ausgeführten Verarbeitungszweige so auszuführen, daß Signalamplituden $A_{i-1}$ vorangegangener Umläufe auf eine bestimmte Anzahl *NUM_ERW* der zu den zugehörigen Auflösungszellen benachbarten Auflösungszellen erweitert werden können.

Es ist ebenfalls gewinnbringend, einen der parallel ausgeführten der Verarbeitungszweige zur Gewichtung der Eingangsamplituden $A_i$ auszuführen. Dabei ist der Zweig so zu gestalten, daß der Gewichtungsprozess die aktuellen Eingangsamplituden $A_i$ und die Eingangsamplituden aus der Vergangenheit $\bar{A}_{i,alt}$ (Vergangenheitsamplitude) jeder einzelnen Auflösungszelle mit dem Faktor $\alpha$ gewichtet und dann addiert.

Darüber hinaus ist es denkbar, daß einer der parallel ausgeführten der Verarbeitungszweige als Bypass-Pfad ausgeführt ist, welcher Eingangsamplituden $A_i$, für welche gilt $A_i > TEK3$, direkt an den Ausgang der Einheit zur Durchführung der Umlaufintegration *UI* leitet. Auf diese Weise werden hohe Zielamplituden, welche von starken aber schnellen Zielen stammen direkt an den *ZIE* weitergeleitet werden, um zu vermeiden, daß diese Zielechos verloren gehen, weil sie auf Grund Ihres einmaligen Auftretens in Entfernungsrichtung vom *PLD* eliminiert würden.

**Patentansprüche**

**1.** Verfahren zur Trennung von Zielen und Clutter bei der Radarsignalverarbeitung, wobei die vom Radarsystem empfangenen Signale zur Detektion von Zielen einer aus einer Umlaufintegration UI und einer Umlaufkorrelation UK bestehenden Umlauf-Integration-Korrelation UIK unterzogen werden,
**dadurch gekennzeichnet,**
**daß** im Rahmen der Umlaufintegration UI in zumindest einem Teilzweig *U*I1, der zumindest einen Teilalgorithmus *ERW* enthält, die einzelnen einer Auflösungszelle des Radarsystems zugeordneten Signalamplituden $A_{i-1}$ mit einem Erweiterungs-Schwellwert *EWS* verglichen werden, und
**daß** bei Überschreiten von *EWS* durch ein oder mehrere $A_{i-1}$, diese Werte $A_{i-1}$ auf eine bestimmte Anzahl *NUM_ERW* von Auflösungszellen übertragen werden,
wobei die Übertragung auf diejenige Auflösungszellen erfolgt, welche in azimutaler und/oder lateraler Richtung an die den entsprechenden Werten $A_{i-1}$ zugeordneten Auflösungszellen grenzen.

**2.** Verfahren nach Anspruch 1, **dadurch gekennzeichnet, daß** die Anzahl der Auflösungszellen, welchen der Wert einer den Erweiterungs-Schwellwert *EWS* überschreitenden Signalamplitude $A_{i-1}$ zugeordnet wird, der maximalen Anzahl *NUM_ERW* von Auflösungszellen entspricht, welche ein zu detektierendes Ziel in Abhängigkeit seiner Geschwindigkeit innerhalb eines Meßzyklus zu durchqueren in der Lage ist.

**3.** Verfahren nach einem der Ansprüche 1 oder 2, **dadurch gekennzeichnet, daß** für den Faktor $\alpha$ für die Gewichtung innerhalb der UI ein Wert von 0.25 gewählt wird.

**4.** Verfahren nach einem der Ansprüche 1 bis 3, **dadurch gekennzeichnet, daß** noch vor der Durchführung der UI diejenigen Parameter aus den Meßdaten $A_i$ (Amplitude eines Signals während des aktuellen Umlaufs) bestimmt werden, welche zur Berechnung der für die Durchführung der UIK notwendigen Schwellwerte notwendig sind.

5. Verfahren nach Anspruch 4, **dadurch gekennzeichnet, daß** als Parameter zur Berechnung der Schwellwerte der Mittelwert $M$ und die Streuung $S$ der Meßdaten bestimmt wird.

6. Verfahren nach einem der Ansprüche 4 oder 5, **dadurch gekennzeichnet, daß** drei Schwellwerte berechnet und zur Durchführung der UIK herangezogen werden.

7. Verfahren nach einem der Ansprüche 4 bis 6, **dadurch gekennzeichnet, daß** die Schwellwerte vorzugsweise anhand des Cluttermodells der Gauss-Verteilung berechnet werden.

8. Verfahren nach einem der Ansprüche 4 bis 7, **dadurch gekennzeichnet, daß** bei der Schwellwertberechnung anhand des Cluttermodells der Gauss-Verteilung wie folgt vorgegangen wird,

   - daß der Schwellwert $TEK2$, welcher eine Schwelle für den Clutter vor der UI darstellt, gemäß $TEK2 = M + S \cdot K2$ mit $K2 = 2{,}32$ (bezogen auf eine Falschalarmwahrscheinlichkeit von $P_{fa} = 10^{-2}$) berechnet wird,
   - daß der Schwellwert $TEK1$, welcher eine Schwelle für den Clutter nach der UI, d.h. bezogen auf die Amplituden der gewichteten Umläufe darstellt, gemäß

$$TEK1 = M + S \cdot \sqrt{\frac{\alpha}{2 - \alpha}} \cdot K1$$

   mit $K1 = 4{,}27$ (bezogen auf eine Falschalarmwahrscheinlichkeit von $P_{fa} = 10^{-5}$) berechnet wird,
   - und daß der Schwellwert $TEK3$, welcher die Schwelle für eine Bypass-Funktion darstellt, gemäß $TEK3 = M + S \cdot K3$ mit $K3 = 4{,}27$ (bezogen auf eine Falschalarmwahrscheinlichkeit von $P_{fa} = 10^{-5}$) berechnet wird.

9. Verfahren nach einem der vorhergehenden Ansprüche, **dadurch gekennzeichnet, daß** $UI1$ durch einen Algorithmus $MUX$ dergestalt erweitert wird, daß vor einem Vergleich der einzelnen, einer Auflösungszelle des Radarsystems zugeordneten Signalamplituden $A_{i-1}$ mit einem Erweiterungs-Schwellwert $EWS$, diejenigen Werte auf Null gesetzt werden, welche nicht größer als die Schwelle $TEK2$ sind.

10. Verfahren nach einem der vorhergehenden Ansprüche, **dadurch gekennzeichnet, daß** $UI1$ durch einen Algorithmus $A1$ dergestalt erweitert wird, daß für jede einzelne Auflösungszelle die durch die Teilalgorithmen $ERW$ und $MUX$ behandelten Signalwerte des vorangegangenen Umlaufs $A_{i-1}$ mit den Werten der Signalamplituden des aktuellen Umlaufs $A_i$ verglichen werden,
und daß für den Fall, daß gilt: $A_{i-1} > 0$ und $A_i > TEK2$, der Wert $A_i$ weiterverarbeitet und ansonsten der Wert Null weiterverarbeitet wird.

11. Verfahren nach einem der vorhergehenden Ansprüche, **dadurch gekennzeichnet, daß** $UI1$ durch einen Algorithmus $PLD$ dergestalt erweitert wird, daß diejenigen der von $A1$ gelieferten Werte $A_i$ der einzelnen Auflösungszellen auf Null gesetzt werden, deren direkte Entfernungs-Nachbarzellen bereits den Wert Null beinhalten.

12. Verfahren nach einem der vorhergehenden Ansprüche, **dadurch gekennzeichnet, daß** $A1$ durch einen Algorithmus $PLD$ dergestalt erweitert wird, daß dieser die an seinem Eingang anliegenden Werte $A_i$, welche kleiner als ein Schwellwert $TEK2$ sind auf Null setzt,
daß der Algorithmus $PLD$ anschließend diejenigen verbliebenen Werte $A_i$ auf Null setzt, deren direkte Entfernungs-Nachbarzellen bereits den Wert Null beinhalten,
und daß die so aus $PLD$ resultierenden Werte durch $A1$ in der Art zur Weiterverarbeitung herangezogen werden, daß für den Fall, daß gilt: $A_{i-1,ERW} > 0$ und $A_i > TEK2$, der Ausgangswert der $PLD$ als Ausgangswert von $A1$ dient und ansonsten der Wert Null.

13. Verfahren nach Anspruch 12, **dadurch gekennzeichnet, daß** innerhalb des Algorithmus $A1$ ein Bypass-Algorithmus realisiert ist, der Werte $A_i$, für die gilt $A_i > TEK3$, am Algorithmus $PLD$ vorbei leitet, so daß für den Fall, daß gilt: $A_{i-1,ERW} > 0$, diese Werte durch $A1$ einer Weiterverarbeitung zugänglich sind.

14. Verfahren nach einem der vorhergehenden Ansprüche, **dadurch gekennzeichnet, daß** die Teilalgorithmen $MUX$, $ERW$, $A1$ und $PLD$ in einem gemeinsamen UI-Teilalgorithmus $UI1$ zusammengefaßt werden.

15. Verfahren nach Anspruch 14, daß innerhalb der UI parallel zu $UI1$ ein Teilalgorithmus $U/2$ betrieben wird, in welchem eine Gewichtung der Signalamplituden $A_i$ unter Verwendung des Faktors $\alpha$ zur Gewichtung stattfindet.

16. Verfahren nach Anspruch 15, **dadurch gekennzeichnet, daß** $UI$/2 durch einen Algorithmus A2 dergestalt erweitert wird, daß neben der standardmäßigen Gewichtung mit dem Faktor $\alpha$ für jede Auflösungszelle der aktuell anstehende, via $\alpha$ gewichtet Amplitudenwert $\bar{A}_{i,neu}$ und den Amplitudenwert des aktuellen Umlaufs $A_i$ mit dem Schwellwert $TEK$2 vergleicht,
und daß für den Fall, daß der gemittelte Amplitudenwert $\bar{A}_{i,neu}$ größer als $TEK$2 ist und gleichzeitig der Amplitudenwert des aktuellen Umlaufs $A_i$ kleiner oder gleich $TEK$2 ist, an Stelle des gemittelten Amplitudenwerts der Wert $\frac{TEK1}{2}$ in den aktuellen Mittelungsprozess einfließt.

17. Verfahren nach einem der vorhergehenden Ansprüche, **dadurch gekennzeichnet, daß** mindestens einem der beiden parallel laufenden UI-Teilalgorithmen $UI$1 und $UI$2 ein Algorithmus zur Datenreduktion vorgeschaltet wird, welcher jene Amplitudenwerte des aktuellen Umlaufs $A_i$ auf Null setzt, welche kleiner oder gleich $TEK$1 sind.

18. Verfahren nach einem der vorhergehenden Ansprüche, **dadurch gekennzeichnet, daß** der größere der beiden, von den parallel laufenden UI-Teilalgorithmen $UI$1 und $UI$2 gelieferten Werte vom UK-Algorithmus der UIK weiterverarbeitet wird.

19. Verfahren nach Anspruch 18, **dadurch gekennzeichnet, daß** im Rahmen der UK für jede Auflösungszelle der entsprechende Amplitudenwert innerhalb des USP-Videos $\bar{A}_{i,neu}$ und der entsprechende Amplitudenwert des aktuellen Umlaufs $A_i$ mit dem Schwellwert $TEK$1 verglichen wird,
und daß nur für den Fall, daß sowohl $\bar{A}_{i,neu}$ als auch $A_i$ größer als $TEK$1 sind, der Wert $\bar{A}_{i,neu}$ an den Zielextraktor $ZIE$ weitergeleitet wird und ansonsten der Wert Null an den ZIE weitergeleitet wird.

20. Verfahren nach einem der vorhergehenden Ansprüche, **dadurch gekennzeichnet, daß** mittels eines Bypass-Algorithmus diejenigen Amplitudenwerte des aktuellen Umlaufs $A_i$ direkt an den $ZIE$ weitergeleitet werden, deren Wert größer als der Schwellwert TEK3 ist.

21. Verfahren nach einem der vorhergehenden Ansprüche, **dadurch gekennzeichnet, daß** innerhalb der $UI$ mittels eines Bypass-Algorithmus diejenigen Amplitudenwerte des aktuellen Umlaufs $A_i$ direkt an den Algorithmus $MAX$ weitergeleitet werden, deren Wert größer als der Schwellwert TEK3 ist.

22. Verfahren nach einem der vorhergehenden Ansprüche, **dadurch gekennzeichnet, daß** der UI-Teilalgorithmus $MUX$ so angepaßt wird, daß an Stelle der Erzeugung eines Datenfeldes, welches die Amplitudenwerten $A_{i-1}$ bzw. Nullen enthält, ein rein binäres Datenfeld erzeugt wird, welches beispielsweise an Stelle der Amplitudenwerte $A_{i-1}$ eine 1 und ansonsten eine 0 enthält.

23. Verfahren nach einem der vorhergehenden Ansprüche, **dadurch gekennzeichnet, daß** der Berechnung der für die Durchführung der UIK notwendigen Schwellwerte ein Algorithmus vorangestellt wird, welcher die Signalamplituden $A_i$ so gewichtet, daß die Clutterverteilung für alle Clutterszenarien annähernd mittelwertfrei ist ($M \approx 0$).

24. Verfahren nach den Ansprüchen 4 bis 7 und 23, **dadurch gekennzeichnet,**

   - **daß** der Schwellwert $TEK$2, gemäß $TEK$2 = $M + S \cdot K$2 mit $K$2 = 2,32 (bezogen auf eine Falschalarmwahrscheinlichkeit von $P_{fa}$ = $10^{-5}$) berechnet wird,
   - und **daß** die Schwellwerte $TEK$1 und $TEK$3, mittels einer mulitplikativen Konstanten $K_j$ aus $TEK$2 abgeleitet werden, gemäß $TEK$1=$TEK$2·$K_1$ bzw. $TEK$3=$TEK$2·$K_3$ berechnet wird.

25. Vorrichtung zur Durchführung des Verfahrens nach einem der Ansprüche 1 bis 24, **dadurch gekennzeichnet, daß** sie eine Einheit zur Durchführung der Umlaufintegration $UI$ aufweist, welche mindestens zwei parallele Verarbeitungszweige umfaßt.

26. Vorrichtung nach Anspruch 25, **dadurch gekennzeichnet, daß** am Ausgang der $UI$ denjenigen Wert, der von den parallelen Verarbeitungszweigen ermittelten Werte, zur Weiterverarbeitung zur Verfügung gestellt wird, welcher am größten ist.

27. Vorrichtung nach einem der Ansprüche 25,26, dadurch gekenntzeichnet, daß einer der parallel ausgeführten Verarbeitungszweige zur Erweiterung von Signalamplituden $A_{i-1}$ vorangegangener Umläufe auf eine bestimmte Anzahl *NUM_ERW* der zu den zugehörigen Auflösungszellen benachbarten Auflösungszellen ausgeführt ist.

28. Vorrichtung nach einem der 25-27 Ansprüche, **dadurch gekennzeichnet, daß** einer der parallel ausgeführten Verarbeitungszweige zur Gewichtung der Eingangsamplituden $A_i$ ausgeführt ist, in der Gestalt, daß der Gewichtungsprozess die aktuellen Eingangsamplituden $A_i$ und die Eingangsamplituden aus der Vergangenheit $\bar{A}_{i,alt}$ (Vergangenheitsamplitude) jeder einzelnen Auflösungszelle mit dem Faktor $\alpha$ gewichtet und dann addiert.

29. Vorrichtung nach einem der 25-28 Ansprüche, **dadurch gekennzeichnet, daß** einer der parallel ausgeführten Verarbeitungszweige als Bypass-Pfad ausgeführt ist, welcher Eingangsamplituden $A_i$, für welche gilt $A_i > TEK3$, direkt an den Ausgang der Einheit zur Durchführung der Umlaufintegration *UI* leitet.

**Claims**

1. Method for separating of targets and clutter during radar signal processing, with the signals which are received by the radar system for the detection of targets being subjected to scan-to-scan correlation StSC, which comprises scan-to-scan integration StSI and correlation between scans CbS in order to detect targets,
   **characterized**
   **in that**, in the course of the scan-to-scan integration StSI in at least one branch element UI1, which includes at least one algorithm element ERW, the individual signal amplitudes $A_{i-1}$ which are associated with one resolution cell of the radar system are compared with an extended threshold value EWS, and
   **in that**, if one or more $A_{i-1}$ exceed EWS, these values $A_{i-1}$ are transferred to a specific number NUM_ERW of resolution cells,
   with the transfer taking place to those resolution cells which are adjacent in the azimuth and/or lateral direction to the resolution cells which are associated with the corresponding values $A_{i-1}$.

2. Method according to Claim 1, **characterized in that** the number of resolution cells which are associated with the value of a signal amplitude $A_{i-1}$ which exceeds the extended threshold value EWS corresponds to the maximum number NUM_ERW of resolution cells which a target to be detected is capable of passing through within one measurement cycle, as a function of its speed.

3. Method according to either of Claims 1 and 2, **characterized in that** a value of 0.25 is selected for the factor $\alpha$ for the weighting within the scan-to-scan integration.

4. Method according to one of Claims 1 to 3, **characterized in that**, even before carrying out the scan-to-scan integration, those parameters which are required for calculation of the threshold values which are required for carrying out the scan-to-scan correlation are determined from the measured data $A_i$ (amplitude of a signal during the current scan).

5. Method according to Claim 4, **characterized in that** the mean value M and the scatter S of the measured data are determined as parameters for calculation of the threshold values.

6. Method according to one of Claims 4 or 5, **characterized in that** three threshold values are calculated, and are used for carrying out the scan-to-scan correlation.

7. Method according to one of Claims 4 to 6, **characterized in that** the threshold values are preferably calculated on the basis of the clutter model of the Gaussian distribution.

8. Method according to one of Claims 4 to 7, **characterized in that** the procedure for threshold value calculation on the basis of the clutter model of the Gaussian distribution is as follows,

   - **in that** the threshold value TEK2 which represents a threshold for the clutter before the scan-to-scan integration is calculated using TEK2 = M + S · K2 where K2 = 2.32 (with respect to a false alarm probability of $P_{fa} = 10^{-2}$),
   - **in that** the threshold value TEK1, which represents a threshold for the clutter after the scan-to-scan integration, that is to say with respect to the amplitudes of the weighted scans, is calculated using

$$TEK1 = M + S \sqrt{\frac{\alpha}{2\text{-}\alpha} \cdot K1} \text{ where } K1 = 4.27.$$

(with respect to a false alarm probability of $P_{fa} = 10^{-5}$),

- and **in that** the threshold value TEK3, which represents the threshold for a bypass function, is calculated using TEK3 = M + S · K3 where K3 = 4.27 (with respect to a false alarm probability of $P_{fa} = 10^{-5}$).

9. Method according to one of the preceding claims, **characterized in that** UI1 is extended by means of an algorithm MUX such that, before a comparison of the individual signal amplitudes $A_{i-1}$ which are associated with one resolution cell of the radar system with an extended threshold value EWS, those values which are not greater than the threshold TEK2 are set to zero.

10. Method according to one of the preceding claims, **characterized in that** UI1 is extended by means of an algorithm A1 such that those signal values from the previous scan $A_{i-1}$ which were dealt with using the algorithm elements ERW and MUX are compared with the values of the signal amplitudes of the current scan $A_i$ for each individual resolution cell,
and **in that**, in the situation where $A_{i-1} > 0$ and $A_i > $ TEK2, the value $A_i$ is processed further, otherwise the value zero is processed further.

11. Method according to one of the preceding claims,
**characterized in that** UI1 is extended by means of an algorithm PLD such that those values $A_i$ of the individual resolution cells which are produced from A1 and whose direct range adjacent cells already include the value zero are set to zero.

12. Method according to one of the preceding claims, **characterized in that** A1 is extended by an algorithm PLD such that this sets the values $A_i$ which are applied to its input and are less than a threshold value TEK2 to zero,
**in that** the algorithm PLD subsequently sets to zero those remaining values $A_i$ whose direct range adjacent cells already contain the value zero,
and **in that** the values which are obtained from PLD in this way are used by A1 in the nature of further processing such that for the situation where $A_{i-1,ERW} > 0$ and $A_i > $ TEK2, the output value of the PLD is used as the output value from A1, otherwise the value zero is used.

13. Method according to Claim 12, **characterized in that** a bypass algorithm is realized within the algorithm A1 which passes values $A_i$ for which $A_i > $ TEK3 past the algorithm PLD such that, for the situation where $A_{i-1,\,ERW} > 0$, these values are accessible by A1 for further processing.

14. Method according to one of the preceding claims, **characterized in that** the algorithm elements MUX, ERW, A1 and PLD are combined in a common scan-to-scan integration algorithm element UI1.

15. Method according to Claim 14, **characterized in that** an algorithm element UI2 is used in parallel with UI1 within the scan-to-scan integration and the signal amplitudes $A_i$ within this algorithm element UI2 are weighted using the factor $\alpha$ for weighting.

16. Method according to Claim 15, **characterized in that** UI2 is extended by means of an algorithm A2 such that, in addition to the standard weighting with the factor $\alpha$ for each resolution cell, the current amplitude value $\overline{A_{i.NEW}}$, weighted with $\alpha$, and the amplitude value of the current scan $A_i$ are compared with the threshold value TEK2, and **in that**, in the situation where the averaged amplitude value $\overline{A_{i.NEW}}$ is greater than TEK2 and the amplitude value of the current scan $A_i$ is at the same time less than or equal to TEK2, the value $\frac{TEK1}{2}$ is included in the current averaging process rather than the averaged amplitude value.

17. Method according to one of the preceding claims, **characterized in that** at least one of the two scan-to-scan integration algorithm elements UI1 and UI2, which are processed in parallel is preceded by an algorithm for data reduction, which sets to zero those amplitude values of the current scan $A_i$ which are less than or equal to TEK1.

18. Method according to one of the preceding claims, **characterized in that** the greater of the two values which are produced by the scan-to-scan integration algorithm elements UI1 and UI2 which are processed in parallel is processed further by the CbS algorithm for the scan-to-scan correlation.

**19.** Method according to Claim 18, **characterized in that**, in the course of the correlation between scans, the corresponding amplitude value within the USP video $\overline{A_{i.NEW}}$ and the corresponding amplitude value for the current scan $A_i$ are compared with the threshold value TEK1 for each resolution cell, and **in that** the value $\overline{A_{i.NEW}}$ is passed on to the target extractor ZIE only if both $\overline{A_{i.NEW}}$ and $A_i$ are greater than TEK1, otherwise the value zero is passed on to the ZIE.

**20.** Method according to one of the preceding claims, **characterized in that** a bypass algorithm is used to pass on those amplitude values of the current scan $A_i$ whose value is greater than the threshold value TEK3 directly to the ZIE.

**21.** Method according to one of the preceding claims, **characterized in that**, within the scan-to-scan integration and by means of a bypass algorithm, those amplitude values of the current scan $A_i$ whose value is greater than the threshold value TEK3 are passed on directly to the algorithm MAX.

**22.** Method according to one of the preceding claims, **characterized in that** the scan-to-scan integration algorithm element MUX is adapted such that a purely binary data field which, for example, contains a 1 in place of the amplitude values $A_{i-1}$, and otherwise contains a 0, is produced instead of production of a data field which contains the amplitude values $A_{i-1}$ or zeros.

**23.** Method according to one of the preceding claims, **characterized in that** the calculation of the threshold values which are required for carrying out the scan-to-scan correlation is preceded by an algorithm which weights the signal amplitudes $A_i$ such that the clutter distribution for all of the clutter scenarios has a mean value approximately equal to 0 ($M \approx 0$).

**24.** Method according to Claims 4 to 7 and 23, **characterized**

- **in that** the threshold value TEK2 is calculated using TEK2 = M + S · K2 where K2 = 2.32 (with respect to a false alarm probability of $P_{fa} = 10^{-5}$),
- and **in that** the threshold values TEK1 and TEK3 are derived by means of a multiplication constant $K_j$ from TEK2, calculated using TEK1 = TEK2·$K_1$ or TEK3 = TEK2·$K_3$.

**25.** Apparatus for carrying out the method according to one of Claims 1 to 24, **characterized in that** the apparatus has a unit for carrying out the scan-to-scan integration StSI, and this unit has at least two parallel processing paths.

**26.** Apparatus according to Claim 25, **characterized in that** that value which is the greatest of the values which are determined by the parallel processing paths is made available for further processing at the output of the scan-to-scan integration.

**27.** Apparatus according to one of Claims 25 and 26, **characterized in that** one of the parallel processing paths which are processed in parallel is designed to extend signal amplitudes $A_{i-1}$ from previous scans to a specific number NUM_ERW of the resolution cells which are adjacent to the associated resolution cells.

**28.** Apparatus according to one of Claims 25 to 27, **characterized in that** one of the processing paths which are processed in parallel is designed in order to weight the input amplitudes $A_i$ in such a way that the weighting process weights the current input amplitudes $A_i$ and the input amplitudes from the past $\overline{A_{i.old}}$ (past amplitude) of each individual resolution cell with the factor $\alpha$, and then adds them.

**29.** Apparatus according to one of Claims 25 to 28, **characterized in that** one of the processing paths which are processed in parallel is in the form of a bypass path, which passes input amplitudes $A_i$ for which $A_i$ > TEK3 directly to the output of the unit for carrying out the scan-to-scan integration StSI.

**Revendications**

**1.** Procédé pour la séparation de cibles et de signaux parasites lors du traitement de signaux radar, dans lequel les signaux reçus par le système de radar pour la détection de cibles sont soumis à une corrélation de balayage à balayage composée d'une intégration par itération UI et d'une corrélation par itération UK, **caractérisé en ce que**, dans le cadre de l'intégration par itération UIK, on compare dans au moins une branche partielle *UI1*, qui contient au moins un algorithme partiel *ERW,* les amplitudes de signal individuelles $A_{i-1}$ associées à une cellule de résolution du système de radar à une valeur de seuil d'extension *EWS,* et **en ce que**, en cas de dépassement de *EWS* par une ou plusieurs $A_{i-1}$, on transfère ces valeurs $A_{i-1}$ à un nombre déterminé *NUM_ERW* de cellules de résolution, le transfert étant effectué aux cellules de résolution qui jouxtent les cellules de résolution associées aux valeurs correspondantes $A_{i-1}$ en direction azimutale et/ou latérale.

2. Procédé selon la revendication 1, **caractérisé en ce que** le nombre des cellules de résolution, auxquelles la valeur d'une amplitude de signal $A_{i-1}$ dépassant la valeur de seuil d'extension *EWS* est associée, correspond au nombre maximal *NUM_ERW* de cellules de résolution qui est en mesure de traverser une cible à détecter en fonction de sa vitesse à l'intérieur d'un cycle de mesure.

3. Procédé selon l'une quelconque des revendications 1 ou 2, **caractérisé en ce que** l'on choisit pour le facteur $\alpha$ pour la pondération à l'intérieur de la UI une valeur de 0,25.

4. Procédé selon l'une quelconque des revendications 1 à 3, **caractérisé en ce que** l'on détermine encore avant l'exécution de la UI, à partir des données de mesure $A_i$ (amplitude d'un signal pendant la boucle actuelle), les paramètres qui sont nécessaires pour le calcul des valeurs de seuil nécessaires pour l'exécution de la UIK.

5. Procédé selon la revendication 4, **caractérisé en ce que** l'on détermine comme paramètres pour le calcul des valeurs de seuil la valeur moyenne *M* et la dispersion *S* des données de mesure.

6. Procédé selon l'une quelconque des revendications 4 ou 5, **caractérisé en ce que** l'on calcule trois valeurs de seuil et on les prend en considération pour l'exécution de la UIK.

7. Procédé selon l'une quelconque des revendications 4 à 6, **caractérisé en ce que** l'on calcule les valeurs de seuil de préférence à l'aide du modèle des signaux parasites de la distribution de Gauss.

8. Procédé selon l'une quelconque des revendications 4 à 7, **caractérisé en ce que** l'on procède de la manière suivante pour le calcul des valeurs de seuil à l'aide du modèle des signaux parasites de la distribution de Gauss,

   - on calcule la valeur de seuil *TEK2*, qui représente un seuil pour le signal parasite avant la UI, selon *TEK2 = M + S·K2* avec *K2* = 2,32 (par rapport à une probabilité de fausse alarme de $P_{fa} = 10^{-2}$),
   - on calcule la valeur de seuil *TEK1*, qui représente un seuil pour le signal parasite après la UI, c'est-à-dire par rapport aux amplitudes des boucles pondérées, selon

$$TEK1 = M + S \cdot \sqrt{\frac{\alpha}{2-\alpha}} \cdot K1$$

   avec *K1* = 4,27 (par rapport à une probabilité de fausse alarme de $P_{fa} = 10^{-5}$),
   - et on calcule la valeur de seuil *TEK3,* qui représente le seuil pour une fonction de dérivation, selon *TEK3 = M + S·K3* avec *K3* = 4,27 (par rapport à une probabilité de fausse alarme $P_{fa} = 10^{-5}$).

9. Procédé selon l'une quelconque des revendications précédentes, **caractérisé en ce que** l'on étend *UI1* par un algorithme *MUX* de telle façon que, avant une comparaison des amplitudes de signal individuelles $A_{i-1}$ associées à une cellule de résolution du système de radar avec une valeur de seuil d'extension *EWS*, on fixe à zéro les valeurs qui ne sont pas supérieures au seuil *TEK2*.

10. Procédé selon l'une quelconque des revendications précédentes, **caractérisé en ce que** l'on étend *UI1* par un algorithme *A1* de telle façon que, pour chaque cellule de résolution individuelle, on compare les valeurs de signal de la boucle précédente $A_{i-1}$ traitées par les algorithmes partiels *ERW* et *MUX* avec les valeurs des amplitudes de signal de la boucle actuelle $A_i$, et **en ce que**, pour le cas où $A_{i-1} > 0$ et $A_i > TEK2$, on retraite la valeur $A_i$ et pour le reste on retraite la valeur zéro.

11. Procédé selon l'une quelconque des revendications précédentes, **caractérisé en ce que** l'on étend *UI1* par un algorithme *PLD,* de telle façon que les valeurs $A_i$ fournies par *A1* des cellules de résolution individuelles, dont les cellules voisines à distance directe contiennent déjà la valeur zéro, soient fixées à zéro.

**12.** Procédé selon l'une quelconque des revendications précédentes, **caractérisé en ce que** l'on étend *A1* par un algorithme *PLD*, de telle façon que celui-ci fixe à zéro les valeurs $A_i$ présentes à son entrée, qui sont inférieures à une valeur de seuil *TEK2*, **en ce que** l'algorithme *PLD* fixe ensuite à zéro les valeurs $A_i$ restantes, dont les cellules voisines à distance directe contiennent déjà la valeur zéro, et **en ce que** les valeurs résultant ainsi de *PLD* sont prises en considération par *A1* pour le retraitement, de telle façon qu'au cas où l'on a $A_{i-1,ERW} > 0$ et $A_i > TEK2$, la valeur de sortie du *PLD* serve de valeur de sortie de *A1* et que pour le reste la valeur soit zéro.

**13.** Procédé selon la revendication 12, **caractérisé en ce que** l'on réalise à l'intérieur de l'algorithme *A1* un algorithme de dérivation, qui transmet en dérivation à l'algorithme *PLD* des valeurs $A_i$ pour lesquelles on a $A_i > TEK3$, de telle façon qu'au cas où $A_{i-1,ERW} > 0$, ces valeurs soient accessibles par *A1* en vue d'un retraitement.

**14.** Procédé selon l'une quelconque des revendications précédentes, **caractérisé en ce que** l'on rassemble les algorithmes partiels *MUX*, *ERW*, *A1* et PLD dans un algorithme partiel d'UI commun *UI1*.

**15.** Procédé selon la revendication 14, **caractérisé en ce que** l'on exécute à l'intérieur de UI parallèlement à *UI1* un algorithme partiel *UI2*, dans lequel on réalise une pondération des amplitudes de signal $A_i$ en utilisant le facteur $\alpha$ pour la pondération.

**16.** Procédé selon la revendication 15, **caractérisé en ce que** l'on étend *UI2* par un algorithme *A2* de telle façon que, à côté de la pondération classique avec le facteur $\alpha$ pour chaque cellule de résolution, on compare la valeur d'amplitude actuellement appliquée, pondérée via $\alpha$, $\bar{A}_{i,nouv}$ et la valeur d'amplitude de la boucle actuelle $A_i$ avec la valeur de seuil *TEK2*, et **en ce qu'**au cas où la valeur d'amplitude moyenne $\bar{A}_{i,nouv}$ est supérieure à *TEK2* et qu'en même temps la valeur d'amplitude de la boucle actuelle $A_i$ est inférieure ou égale à *TEK2*, on introduit la valeur $\frac{TEK1}{2}$ dans l'opération actuelle de calcul de la moyenne en lieu et place de la valeur d'amplitude moyenne.

**17.** Procédé selon l'une quelconque des revendications précédentes, **caractérisé en ce que** l'on installe avant au moins un des deux algorithmes partiels de UI exécutés en parallèle *UI1* et *UI2* un algorithme pour la réduction des données, qui fixe à zéro les valeurs d'amplitude de la boucle actuelle $A_i$ qui sont inférieures ou égales à *TEK1*.

**18.** Procédé selon l'une quelconque des revendications précédentes, **caractérisé en ce que** l'on retraite avec l'algorithme UK de la UIK la plus grande des deux valeurs fournies par les deux algorithmes de UI exécutés en parallèle *UI1* et *UI2*.

**19.** Procédé selon la revendication 18, **caractérisé en ce que**, dans le cadre de la UK, on compare pour chaque cellule de résolution la valeur d'amplitude correspondante à l'intérieur de la vidéo USP $\bar{A}_{i,nouv}$ et la valeur d'amplitude correspondante de la boucle actuelle $A_i$ avec la valeur de seuil *TEK1*, et **en ce que**, uniquement au cas où aussi bien $A_{i,nouv}$ que $A_i$ sont supérieures à *TEK1*, on transmet la valeur $\bar{A}_{i,nouv}$ à l'extracteur de cible *ZIE* et pour le reste on transmet au ZIE la valeur zéro.

**20.** Procédé selon l'une quelconque des revendications précédentes, **caractérisé en ce que**, au moyen d'un algorithme de dérivation, on transmet directement au *ZIE* les valeurs d'amplitude de la boucle actuelle $A_i$ dont les valeurs sont supérieures à la valeur de seuil *TEK3*.

**21.** Procédé selon l'une quelconque des revendications précédentes, **caractérisé en ce que**, à l'intérieur de la *UI*, on transmet directement à l'algorithme *MAX*, au moyen d'un algorithme de dérivation, les valeurs d'amplitude de la boucle actuelle $A_i$, dont la valeur est supérieure à la valeur de seuil *TEK3*.

**22.** Procédé selon l'une quelconque des revendications précédentes, **caractérisé en ce que** l'on adapte l'algorithme partiel de UI *MUX* de telle façon que, au lieu de produire un champ de données qui contient les valeurs d'amplitude $A_{i-1}$ respectivement zéro, on produit un champ de données purement binaire qui contient par exemple un 1 au lieu des valeurs d'amplitude $A_{i-1}$ et un 0 pour le reste.

**23.** Procédé selon l'une quelconque des revendications précédentes, **caractérisé en ce que** l'on place avant le calcul des valeurs de seuil nécessaires pour l'exécution de la UIK un algorithme qui pondère les amplitudes de signal $A_i$ de telle façon que la distribution des signaux parasites pour tous les scenarii de signaux parasites ne comporte pratiquement pas de valeur moyenne ($M \approx 0$).

**24.** Procédé selon les revendications 4 à 7 et 23,

**caractérisé en ce que**

- on calcule la valeur de seuil *TEK2* selon *TEK2* = *M* + *S·K2* avec *K2* = 2,32 (par rapport à une probabilité de fausse alarme de $P_{fa}$ = 10$^{-5}$),
- et on déduit les valeurs de seuil *TEK1* et *TEK3* à partir de *TEK2* au moyen d'une constante de multiplication $K_j$, selon *TEK1* = *TEK2·K$_1$*, respectivement *TEK3* = *TEK2·K$_3$*.

25. Dispositif pour l'exécution du procédé selon l'une quelconque des revendications 1 à 24, **caractérisé en ce qu'**il comporte une unité pour l'exécution de l'intégration itérative *UI*, qui comprend au moins deux branches de traitement parallèles.

26. Dispositif selon la revendication 25, **caractérisé en ce qu'**à la sortie de la *UI*, on rend disponible pour un traitement ultérieur celle des valeurs déterminées par les branches de traitement parallèles, qui est la plus grande.

27. Dispositif selon l'une quelconque des revendications 25, 26, **caractérisé en ce qu'**une des branches de traitement réalisées en parallèle est réalisée de façon à étendre des signaux d'amplitude $A_{i-1}$ de boucles précédentes à un nombre déterminé *NUM_ERW* des cellules de résolution voisines des cellules de résolution associées.

28. Dispositif selon l'une quelconque des revendications 25 à 27, **caractérisé en ce qu'**une des branches de traitement réalisées en parallèle est réalisée de façon à pondérer les amplitudes d'entrée $A_i$, de telle manière que l'opération de pondération pondère les amplitudes d'entrée actuelles $A_i$ et les amplitudes d'entrée du passé $\bar{A}_{i,ant}$ (amplitudes antérieures) de chaque cellule de résolution individuelle avec le facteur $\alpha$ et ensuite les additionne.

29. Dispositif selon l'une quelconque des revendications 25 à 28, **caractérisé en ce qu'**une des branches de traitement réalisées en parallèle est réalisée en un chemin de dérivation, qui conduit des amplitudes d'entrée $A_i$, pour lesquelles on a $A_i$ > TEK3, directement à la sortie de l'unité pour exécuter l'intégration itérative *UI*.